# EUROPÄISCHE PATENTSCHRIFT

(11) **EP 4 290 128 B1**
(45) Veröffentlichungstag und Bekanntmachung des Hinweises auf die Patenterteilung: **27.11.2024**
(21) Anmeldenummer: 22177610.7
(22) Anmeldetag: 07.06.2022
(51) Int. Cl.: F21S 41/63, F21S 43/20, F21S 41/143, F21S 41/153

(54) **BELEUCHTUNGSVORRICHTUNG FÜR EINEN KRAFTFAHRZEUGSCHEINWERFER ODER EIN KRAFTFAHRZEUG**
LIGHTING DEVICE FOR A MOTOR VEHICLE HEADLAMP OR A MOTOR VEHICLE
DISPOSITIF D'ÉCLAIRAGE POUR UN PHARE DE VÉHICULE AUTOMOBILE OU VÉHICULE AUTOMOBILE

(43) Veröffentlichungstag der Anmeldung: 13.12.2023
(73) Patentinhaber: ZKW Group GmbH, 3250 Wieselburg (AT)
(72) Erfinder: Stadler, Manuel, 3681 Hofamt Priel (AT)
(74) Vertreter: Patentanwaltskanzlei Matschnig & Forsthuber OG

(56) Entgegenhaltungen:
- EP-A1- 3 462 078
- EP-A1- 3 789 658
- KR-A- 20190 125 750
- US-A1- 2006 039 160

## Beschreibung

Die Erfindung betrifft eine Beleuchtungsvorrichtung für einen Kraftfahrzeugscheinwerfer oder ein Kraftfahrzeug, wobei die Beleuchtungsvorrichtung ein Leuchtmittel und eine dem Leuchtmittel zugeordnete Optikvorrichtung aufweist, wobei das Leuchtmittel zur Erzeugung von Licht und zur Abstrahlung des erzeugten Lichts auf die Optikvorrichtung eingerichtet ist, und die Optikvorrichtung zur Realisierung von zumindest zwei unterschiedlichen Lichtfunktionen aus dem Licht des Leuchtmittels eingerichtet ist,
wobei die Optikvorrichtung einen optisch wirksamen Bereich umfasst, welcher eine optische Achse und eine Hauptebene aufweist, wobei der optisch wirksame Bereich eine Lichteintrittsfläche und eine der Lichteintrittsfläche gegenüberliegende Lichtaustrittsfläche aufweist, wobei von dem Leuchtmittel abgestrahltes Licht über die Lichteintrittsfläche in den optisch wirksamen Bereich der Optikvorrichtung eintritt, durch den optisch wirksamen Bereich der Optikvorrichtung durchtritt und über die Lichtaustrittsfläche aus dem optisch wirksamen Bereichs der Optikvorrichtung austritt, wobei die Optikvorrichtung ein Einstellmittel aufweist, welches dazu eingerichtet ist, Betriebszustände der Optikvorrichtung einzustellen, wobei zumindest zwei unterschiedliche Betriebszustände der Optikvorrichtung vorgesehen sind,
wobei in einem ersten Betriebszustand die Optikvorrichtung mit dem Licht des Leuchtmittels beim Durchtritt durch den optisch wirksamen Bereich eine erste Lichtfunktion ausbildet, und in einem zweiten Betriebszustand die Optikvorrichtung mit dem Licht des Leuchtmittels beim Durchtritt durch den optisch wirksamen Bereich eine zweite Lichtfunktion ausbildet.

Die Erfindung betrifft ferner einen Kraftfahrzeugscheinwerfer mit einer Beleuchtungsvorrichtung.

Im Stand der Technik sind Beleuchtungsvorrichtungen für Kraftfahrzeugscheinwerfer bekannt. Es ist auch bekannt, dass mit solchen Beleuchtungsvorrichtungen mehrere Lichtfunktionen realisierbar sind. Nachteiligerweise umfassen derartige Beleuchtungsvorrichtungen in der Regel zahlreiche lichttechnische Komponenten, wie beispielsweise verschieden ausgestaltete Projektionslinsen und diesen zugeordnete, meist unterschiedliche, Lichtquellen, um mehrere Lichtfunktionen erzeugen zu können. Andere Beleuchtungsvorrichtungen für einen Kraftfahrzeugscheinwerfer sind aus der EP3462078 A1 bekannt.

Die Aufgabe der vorliegenden Erfindung besteht darin, die Nachteile des Standes der Technik zu lindern bzw. zu beseitigen. Die Erfindung setzt sich daher insbesondere zum Ziel, eine Beleuchtungsvorrichtung zu schaffen, welche mehrere Lichtfunktionen realisieren kann und dabei einen möglichst einfachen bzw. teilearmen Aufbau hat.

Diese Aufgabe wird durch eine Beleuchtungsvorrichtung mit den Merkmalen von Anspruch 1 gelöst. Bevorzugte Ausführungen sind in den abhängigen Ansprüchen angegeben. Erfindungsgemäß umfasst das Leuchtmittel eine Vielzahl von in einem Mindestabstand zueinander beabstandeten Lichtquellen, welche in einer Lichtquellenfläche, vorzugsweise gleichmäßig, verteilt an einem Lichtquellenträger des Leuchtmittels angeordnet sind, wobei jede Lichtquelle ein divergentes Lichtbündel mit einem Öffnungswinkel abstrahlt, welches sich entlang einer Hauptabstrahlrichtung ausbreitet, wobei jedes Lichtbündel an dem optisch wirksamen Bereich der Optikvorrichtung einen Leuchtfleck ausbildet,
wobei der optisch wirksame Bereich der Optikvorrichtung Streuelemente aufweist, welche dazu eingerichtet sind, das Licht der Lichtquellen beim Durchtritt durch den optisch wirksamen Bereich um die Hauptabstrahlrichtung zu streuen,
wobei das Einstellmittel dazu eingerichtet ist, die Optikvorrichtung derart einzustellen, dass im ersten Betriebszustand der optisch wirksame Bereich der Optikvorrichtung einen ersten Normalabstand zu der Lichtquellenfläche aufweist und im zweiten Betriebszustand der optisch wirksame Bereich der Optikvorrichtung einen zweiten Normalabstand zu der Lichtquellenfläche aufweist, wobei der erste Normalabstand derart ist, dass Leuchtflecken von Lichtbündeln von zwei benachbarten Lichtquellen an dem optisch wirksamen Bereich überlappungsfrei sind, wobei der zweite Normalabstand größer als der erste Normalabstand ist, sodass Leuchtflecken von Lichtbündeln von zwei benachbarten Lichtquellen an dem optisch wirksamen Bereich zumindest teilweise überlappen.

Durch den Überlapp der Leuchtflecken bzw. der Lichtbündel im zweiten Betriebszustand ergibt sich der Vorteil, dass das Licht der einzelnen Lichtquellen bzw. Lichtbündel zu einem Gesamtlichtbild (bzw. Gesamtlichtbündel) überlappt, welches die zweite Lichtfunktion definiert, wobei vorteilhafterweise im ersten Betriebszustand die erste Lichtfunktion auf Grund der überlappungsfreien Lichtbündel durch die einzelnen Lichtbündel der Lichtquellen definiert ist. Somit können verschiedene Lichtfunktionen in Abhängigkeit des Normalabstands zwischen der Optikvorrichtung (bzw. deren optisch wirksamen Bereich) und den Lichtquellen des Leuchtmittels erzeugt werden. Insbesondere kann der optisch wirksame Bereich der Optikvorrichtung diffus streuend ausgebildet sein, wobei durch den im zweiten Betriebszustand vergrößerten zweiten Normalabstand zwischen dem optisch wirksamen Bereich der Optikvorrichtung und den Lichtquellen und den dadurch erzeugbaren Überlapp der Lichtbündel sowie der Streuung der Lichtbündel beim Durchtritt durch den optisch wirksamen Bereich ein im Wesentlichen (für einen Betrachter) unscharfes bzw. diffus gestreutes Gesamtlichtbild an der Lichtaustrittsfläche des optisch wirksamen Bereichs realisiert werden kann. Im ersten Betriebszustand ist hingegen der erste Normalabstand so gering (bzw. gegenüber dem zweiten Normalabstand soweit reduziert), dass es zu keinem Überlapp der Lichtbündel vor dem Auftreffen auf den optisch wirksamen Bereich kommen kann, wodurch die streuende Wirkung des optisch wirksamen Bereichs keine optisch signifikante Auswirkung auf die Lichtbündel hat. Im ersten Betriebszustand kann es somit ebenfalls zu einer diffusen Streuung der Lichtbündel bei deren Durchtritt durch den optisch wirksamen Bereich kommen, jedoch wird die erste Lichtfunktion durch die einzelnen Lichtbündel bzw. die einzelnen Lichtquellen gebildet und nicht, wie im zweiten Betriebszustand, durch den Überlapp der Lichtbündel. Die zweite Lichtfunktion ist aufgrund der Überlappung der Lichtbündel für einen Betrachter im Wesentlichen verschwommen bzw. kann ein Betrachter die Positionen der einzelnen Lichtquellen bei der zweiten Lichtfunktion nicht mehr erkennen. Dadurch ergibt sich der Effekt, dass der Betrachter der Optikvorrichtung im zweiten Betriebszustand einen homogen leuchtenden optisch wirksamen Bereich erkennen bzw. wahrnehmen kann. Im Unterschied dazu ist im ersten Betriebszustand der Normalabstand zwischen den Lichtquellen und der Optikvorrichtung bzw. dem optisch wirksamen Bereich der Optikvorrichtung kleiner als im zweiten Betriebszustand, wodurch die Lichtbündel (bzw. Lichtkegel) von benachbarten Lichtquellen vor dem Durchtritt durch den optisch wirksamen Bereich nicht überlappen. Dadurch dass sich das Licht von benachbarten Lichtquellen entlang der Hauptabstrahlrichtung des Lichts nicht vermischt (bzw. die Lichtbündel nicht überlappen), kann ein Betrachter die einzelnen Positionen der Lichtquellen wahrnehmen bzw. erkennen. Die erste Lichtfunktion ist demnach aus den einzelnen leuchtenden Lichtquellen zusammengesetzt wobei jede Lichtquelle erkennbar ist. Bei einem Übergang von dem ersten Betriebszustand zu dem zweiten Betriebszustand kann das Einstellmittel 5 den optisch wirksamen Bereich 4 im Wesentlichen entlang der optischen Achse des optisch wirksamen Bereichs 4, insbesondere linear, verschieben.

Es kann vorgesehen sein, dass die Überlappung der Leuchtflecken von benachbarten Lichtbündeln im zweiten Betriebszustand zumindest 25 %, vorzugsweise mehr als 50%, insbesondere mehr als 75%, beträgt. Je größer der Überlapp von benachbarten Lichtbündeln desto homogener kann die zweite Lichtfunktion sein bzw. desto gleichmäßiger kann der optisch wirksame Bereich im zweiten Betriebszustand leuchten.

Es kann vorgesehen sein, dass die Hauptabstrahlrichtung im Wesentlichen parallel zur optischen Achse des optisch wirksamen Bereichs orientiert ist. Vorzugsweise sind die Hauptabstrahlrichtungen aller Lichtquellen parallel zur optischen Achse des optisch wirksamen Bereichs.

Es kann vorgesehen sein, dass der optisch wirksame Bereich der Optikvorrichtung eben ausgestaltet ist, wobei die optische Achse des optisch wirksamen Bereichs orthogonal zur Hauptebene des optisch wirksamen Bereichs orientiert ist. Der optisch wirksame Bereich der Optikvorrichtung kann als Folienelement ausgestaltet sein. Der optisch wirksame Bereich kann insbesondere als eine ebene, optisch wirksame, Streufolie ausgebildet sein, welche dazu eingerichtet ist, Licht beim Durchtritt durch die Streufolie, bevorzugt diffus, zu streuen. Die Optikvorrichtung kann zu dem Leuchtmittel derart angeordnet sein, dass der optisch wirksame Bereich der Optikvorrichtung im Wesentlichen parallel zur Lichtquellenfläche des Leuchtmittels orientiert ist.

Es kann vorgesehen sein, dass die Streuelemente eine Vielzahl von in einem, vorzugsweise gleichmäßigen, Raster nebeneinander angeordneten Streulinsen, eine Vielzahl von streuend ausgebildeten Oberflächenstrukturen, oder eine Vielzahl von innerhalb des optisch wirksamen Bereichs angeordneten Streupartikelumfasst. Insbesondere sind die Streuelemente dazu eingerichtet, das Licht der Lichtquellen beim Durchtritt durch den optisch wirksamen Bereich, bevorzugt diffus, zu streuen.

Es kann vorgesehen sein, dass der Übergang vom ersten Normalabstand zum zweiten Normalabstand zwischen der Hauptebene des optisch wirksamen Bereichs der Optikvorrichtung und der Lichtquellenfläche der Lichtquellen mit dem Einstellmittel im Wesentlichen stufenlos einstellbar ist. Dazu kann das Einstellmittel beispielsweise ein elektrisch ansteuerbares Linearantriebselement umfassen.

Es kann vorgesehen sein, dass das Einstellmittel dazu eingerichtet ist, einen von dem ersten und zweiten Betriebszustand unterschiedlichen dritten Betriebszustand der Optikvorrichtung einzustellen, wobei das Einstellmittel beim Übergang in den dritten Betriebszustand eine Verschiebung und/oder Verschwenkung der Optikvorrichtung relativ zu den Lichtquellen des Leuchtmittels durchführt, wobei bei der Verschiebung und/oder Verschwenkung die Optikvorrichtung derart verschoben und/oder verschwenkt wird, dass im dritten Betriebszustand der optisch wirksame Bereich der Optikvorrichtung außerhalb eines Strahlengangs des Lichts des Leuchtmittels liegt, sodass im dritten Betriebszustand der optisch wirksame Bereich unbeleuchtet ist. Dadurch ergibt sich der Vorteil, dass im dritten Betriebszustand eine dritte Lichtfunktion realisierbar ist, welche, wie die erste Lichtfunktion, lediglich von den Lichtquellen, ohne einer zusätzlichen optischen Wirkung der Optikvorrichtung, gebildet werden kann, wobei dadurch, dass der optisch wirksame Bereich der Optikvorrichtung unbeleuchtet bleibt, dieser einem reduzierten Wärmeeinfluss ausgesetzt ist, wodurch wiederum die Lebensdauer der Optikvorrichtung erhöht werden kann.

Es kann vorgesehen sein, dass die Beleuchtungsvorrichtung eine Lichtquellen-Steuervorrichtung umfasst, welche dazu eingerichtet ist, die Lichtquellen des Leuchtmittels einzeln anzusteuern, wobei vorzugsweise die Lichtquellen als LEDs ausgebildet sind. Dadurch ergibt sich der Vorteil, dass eine große Anzahl an unterschiedlichen Lichtfunktionen realisierbar ist.

Es kann vorgesehen sein, dass die Lichtquellen in der Lichtquellenfläche an dem Lichtquellenträger in einem Raster verteilt angeordnet sind, wobei die Lichtquellen insbesondere entlang von Zeilen und Spalten eines zweidimensionalen, vorzugsweise gleichmäßigen, Rasters angeordnet sind. Insbesondere können die Lichtquellen auf der Lichtquellenfläche gemäß einer Lichtquellen-Flächendichte verteilt sein, wobei die Lichtquellen-Flächendichte als die Anzahl an Lichtquellen pro Lichtquellenfläche definiert ist. Die Lichtquellen-Flächendichte kann über die gesamte Lichtquellenfläche konstant sein. Es können auch Bereiche der Lichtquellenfläche unterschiedliche Lichtquellen-Flächendichten aufweisen, wodurch wiederum die Anzahl an möglichen Lichtfunktionen (bzw. Leuchtmustern, welche mittels leuchtender Lichtquellen erzeugbar sind) erhöht werden kann.

Es kann vorgesehen sein, dass der Lichtquellenträger eben ausgestaltet ist, wobei vorzugsweise die Lichtquellenfläche, welche insbesondere eben ausgestaltet ist, im Wesentlichen parallel zu dem Lichtquellenträger orientiert ist. Dadurch kann die Beleuchtungsvorrichtung besonders kompakt ausgestaltet werden.

Es kann vorgesehen sein, dass die Lichtquellen des Leuchtmittels aus zumindest zwei Lichtquellengruppen gebildet sind, wobei Lichtquellen einer ersten Lichtquellengruppe in der Lichtquellenfläche an dem Lichtquellenträger in einem ersten, vorzugsweise gleichmäßigen, Raster mit einem ersten Rasterabstand zueinander angeordnet sind, wobei Lichtquellen einer zweiten Lichtquellengruppe in der Lichtquellenfläche an dem Lichtquellenträger in einem zweiten, vorzugsweise gleichmäßigen, Raster mit einem zweiten Rasterabstand zueinander angeordnet sind, wobei der erste Rasterabstand größer als der zweite Rasterabstand ist. Alternativ dazu kann die erste Lichtquellengruppe eine erste Lichtquellen-Flächendichte und die zweite Lichtquellengruppe eine zweite Lichtquellen-Flächendichte aufweisen, wobei die erste Lichtquellen-Flächendichte und die zweite Lichtquellen-Flächendichte unterschiedlich sind. Dadurch kann die Anzahl an möglichen Lichtfunktionen weiter erhöht werden.

Es kann vorgesehen sein, dass der optisch wirksame Bereich der Optikvorrichtung aus zumindest zwei optisch wirksamen Teilbereichen gebildet ist, wobei ein erster optisch wirksamer Teilbereich eine erste Anzahl an Streuelementen und ein zweiter optisch wirksamer Teilbereich eine zweite Anzahl an Streuelementen aufweist, wobei die erste und zweite Anzahl an Streuelementen unterschiedlich sind. Dadurch kann die Anzahl an möglichen Lichtfunktionen weiter erhöht werden.

Es kann vorgesehen sein, dass das Leuchtmittel zu der Optikvorrichtung derart angeordnet ist, dass Licht der ersten Lichtquellengruppe auf den ersten optisch wirksamen Teilbereich und Licht der zweiten Lichtquellengruppe auf den zweiten optisch wirksamen Teilbereich trifft. Dadurch kann die Anzahl an möglichen Lichtfunktionen noch weiter erhöht werden.

Es kann vorgesehen sein, dass wobei die erste Lichtfunktion eine Informationswiedergabe-Lichtfunktion ist, mittels derer ein definierbares, vorgebbares Symbol, welches aus einzelnen leuchtenden Lichtquellen zusammengesetzt ist, darstellbar ist, wobei vorzugsweise die zweite Lichtfunktion ein Bremslicht, eine Fahrtrichtungsanzeiger-Lichtfunktion, ein Tagfahrlicht, ein Positionslicht oder ein Stopplicht ist.

Die Erfindung kann einen Kraftfahrzeugscheinwerfer mit einer erfindungsgemäßen Beleuchtungsvorrichtung umfassen.

Im Rahmen dieser Beschreibung sind die Begriffe "oben", "unten", "horizontal", "vertikal" als Angaben der Ausrichtung zu verstehen, wenn die Beleuchtungsvorrichtung in normaler Benutzungsstellung angeordnet ist, nachdem sie in einem Kraftfahrzeugscheinwerfer oder einem Kraftfahrzeug eingebaut wurde.

Die Erfindung wird nachstehend anhand eines bevorzugten Ausführungsbeispiels, auf das sie jedoch nicht beschränkt sein soll, noch weiter erläutert. In den Zeichnungen zeigt:
Fig. 1 eine Seitenansicht einer erfindungsgemäßen Beleuchtungsvorrichtung in einem ersten Betriebszustand;
Fig. 1a eine Vorderansicht der Beleuchtungsvorrichtung gemäß Fig 1;
Fig. 2 eine Seitenansicht der Beleuchtungsvorrichtung gemäß Fig. 1 in einem zweiten Betriebszustand; und
Fig. 2a eine Vorderansicht der Beleuchtungsvorrichtung gemäß Fig 2.

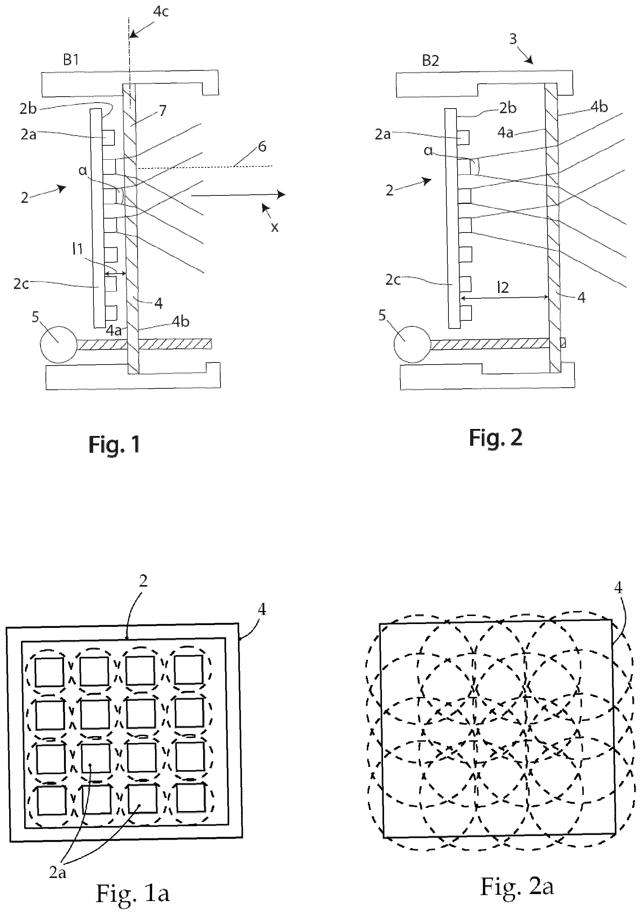

Die Figuren sind schematisch und stark vereinfacht dargestellt, wobei für die Erfindung unwesentliche Komponenten nicht gezeigt sind. Insbesondere sind in den Fig. 1 und 2 die Anzahl an Lichtquellen 2a des Leuchtmittels 2 im Vergleich zu den Fig. 1a und 2a zur besseren Übersicht stark reduziert.

Fig. 1 zeigt eine erfindungsgemäße Beleuchtungsvorrichtung 1 für einen Kraftfahrzeugscheinwerfer oder ein Kraftfahrzeug. Die Beleuchtungsvorrichtung 1 umfasst ein Leuchtmittel 2 und eine dem Leuchtmittel 2 zugeordnete Optikvorrichtung 3. Das Leuchtmittel 2 ist zur Erzeugung von Licht und zur Abstrahlung des erzeugten Lichts auf die Optikvorrichtung 3 eingerichtet. Die Optikvorrichtung 3 ist zur Realisierung von zumindest zwei unterschiedlichen Lichtfunktionen aus dem Licht des Leuchtmittels 2 eingerichtet. Die Optikvorrichtung 3 weist einen optisch wirksamen Bereich 4 auf, welcher eine optische Achse x und eine Hauptebene 4c hat. Der optisch wirksame Bereich 4 umfasst eine Lichteintrittsfläche 4a und eine der Lichteintrittsfläche 4a gegenüberliegende Lichtaustrittsfläche 4b. Der optisch wirksame Bereich 4 der Optikvorrichtung 3 ist eben ausgestaltet, wobei die optische Achse x des optisch wirksamen Bereichs 4 orthogonal zur Hauptebene 4c des optisch wirksamen Bereichs 4 orientiert ist.

Von dem Leuchtmittel 2 abgestrahltes Licht tritt über die Lichteintrittsfläche 4a in den optisch wirksamen Bereich 4 ein, tritt durch den optisch wirksamen Bereich 4 hindurch und tritt über die Lichtaustrittsfläche 4b aus dem optisch wirksamen Bereich 4 aus. Die Optikvorrichtung 3 umfasst ein Einstellmittel 5, welches dazu eingerichtet ist, Betriebszustände der Optikvorrichtung 3 einzustellen, wobei zumindest zwei unterschiedliche Betriebszustände der Optikvorrichtung 3 vorgesehen sind.

In Fig. 1 ist die Optikvorrichtung in einem ersten Betriebszustand B1, wobei die Optikvorrichtung 3 im ersten Betriebszustand B1 mit dem Licht des Leuchtmittels 2 beim Durchtritt durch den optisch wirksamen Bereich 4a eine erste Lichtfunktion ausbildet.

Fig. 2 zeigt einen zweiten Betriebszustand B2 der Optikvorrichtung, in welchem die Optikvorrichtung 3 mit dem Licht des Leuchtmittels 2 beim Durchtritt durch den optisch wirksamen Bereich 3 eine, von der ersten Lichtfunktion unterschiedliche, zweite Lichtfunktion ausbildet.

Das Leuchtmittel 2 weist eine Vielzahl von in einem Mindestabstand zueinander beabstandeten Lichtquellen 2a auf, welche in einer Lichtquellenfläche 2b, vorzugsweise gleichmäßig, verteilt an einem Lichtquellenträger 2c des Leuchtmittels 2 angeordnet sind. In dem gezeigten Ausführungsbeispiel gemäß Fig. 1 und 2 umfasst das Leuchtmittel 2 sieben vertikal übereinander liegende und zueinander beabstandete Lichtquellen 2a, welche eine vertikale Lichtquellenreihe bilden, wobei mehrere vertikale Lichtquellenreihen horizontal zueinander beanstandet sind. Bei n vertikalen Lichtquellenreihen umfasst das Leuchtmittel 2 somit n×7 Lichtquellen 2a. In den Seitenansichten, Fig. 1 und 2, sind jeweils die äußersten vertikalen Lichtquellenreihen erkennbar. Jede Lichtquelle 2a kann ein divergentes Lichtbündel mit einem Öffnungswinkel a abstrahlen, wobei sich die Lichtbündel entlang einer Hauptabstrahlrichtung 6 ausbreiten. Jedes Lichtbündel erzeugt an dem optisch wirksamen Bereich 4 der Optikvorrichtung 3 einen Leuchtfleck. Die Hauptabstrahlrichtung 6 ist im Wesentlichen parallel zur optischen Achse x des optisch wirksamen Bereichs 4 orientiert.

In den Fig. 1 und 2 sind die obersten und die unteren drei Lichtquellen 2a (bzw. deren in der Blattebene verlaufenden horizontalen Lichtquellen-Reihen) nicht eingeschaltet. Die eingeschalteten Lichtquellen sind durch ein eingezeichnetes schematisches Lichtbündel erkennbar.

Fig. 1a und 2a zeigen jeweils eine Vorderansicht der Beleuchtungsvorrichtung 1, wobei die Vielzahl von Lichtquellen 2a in Fig. 1 erkennbar sind, da der erste Betriebszustand B1 vorliegt. Fig. 2a zeigt eine Vorderansicht der Beleuchtungsvorrichtung 1 im zweiten Betriebszustand B2, wobei die einzelnen Lichtquellen 2a nicht mehr erkennbar sind. Der im Vergleich zum Zustand B1 vorhandene Überlapp der einzelnen Lichtkegel bzw. Lichtbündel wird durch überlappende strichlierte Kreise angedeutet. In den Fig. 1a und 2a sind jeweils alle Lichtquellen 2a eingeschaltet.

Der optisch wirksame Bereich 4 der Optikvorrichtung 3 umfasst Streuelemente 7, welche dazu eingerichtet sind, das Licht der Lichtquellen 2a beim Durchtritt durch den optisch wirksamen Bereich 4 um die Hauptabstrahlrichtung 6 zu streuen. Die Streuelemente 7 umfassen beispielsweise eine Vielzahl von in einem, vorzugsweise gleichmäßigen, Raster nebeneinander angeordneten Streulinsen, eine Vielzahl von streuend ausgebildeten Oberflächenstrukturen, oder eine Vielzahl von innerhalb des optisch wirksamen Bereichs 4 angeordneten Streupartikel.

Das Einstellmittel 5 ist dazu eingerichtet ist, die Optikvorrichtung 3 derart einzustellen, dass im ersten Betriebszustand B1 der optisch wirksame Bereich 4 der Optikvorrichtung 3 einen ersten Normalabstand L1 zu der Lichtquellenfläche 2b aufweist und im zweiten Betriebszustand B2 der optisch wirksame Bereich 4 der Optikvorrichtung 3 einen zweiten Normalabstand L2 zu der Lichtquellenfläche 2b aufweist. Der erste Normalabstand L1 ist derart, dass Leuchtflecken von Lichtbündeln von zwei benachbarten Lichtquellen 2a an der Lichteintrittsfläche 4a des optisch wirksamen Bereichs 4 überlappungsfrei sind (Fig. 1). Der zweite Normalabstand L2 ist größer als der erste Normalabstand L1, sodass Leuchtflecken von Lichtbündeln von zwei benachbarten Lichtquellen 2a an der Lichteintrittsfläche 4a des optisch wirksamen Bereichs 4 zumindest teilweise überlappen. Der Überlapp der Leuchtflecken von benachbarten Lichtbündeln beträgt im zweiten Betriebszustand B2 zumindest 25 %, vorzugsweise mehr als 50%, insbesondere mehr als 75%.

Der Übergang vom ersten Normalabstand L1 zum zweiten Normalabstand L2 (zwischen der Hauptebene 4c des optisch wirksamen Bereichs 4 und der Lichtquellenfläche 2b des Leuchtmittels 2) ist mit dem Einstellmittel 5 im Wesentlichen stufenlos einstellbar. Dazu bewegt das Einstellmittel 5 den optisch wirksamen Bereich 4 im Wesentlichen entlang der optischen Achse x des optisch wirksamen Bereichs 4.

Die Beleuchtungsvorrichtung 1 umfasst weiters eine Lichtquellen-Steuervorrichtung (nicht gezeigt), welche dazu eingerichtet ist, die Lichtquellen 2a des Leuchtmittels 2 einzeln anzusteuern, wobei vorzugsweise die Lichtquellen 2a als LEDs ausgebildet sind.

Wie in den Fig. 1a bzw. 2a erkennbar ist, sind die Lichtquellen 2a in einem Raster verteilt angeordnet, wobei die Lichtquellen 2a insbesondere entlang von Zeilen und Spalten eines zweidimensionalen, vorzugsweise gleichmäßigen, Rasters angeordnet sind. Die oberen und unteren Lichtquellen 2a sind in dem in Fig. 1 gezeigten Beispiel ausgeschaltet, mittlere Lichtquellen sind eingeschaltet, wodurch ein leuchtender Streifen erzeugt wird. In Fig. 1a ist der Betriebszustand B1 gezeigt (wobei in diesem Beispiel alle Lichtquellen 2a eingeschaltet sind), wobei durch den geringeren Normalabstand L1 zwischen den Lichtquellen 2a und der Optikvorrichtung 3 (bzw. dem optisch wirksamen Bereich 4) die Lichtquellen 2a scharf dargestellt sind. In Fig. 2a ist der Betriebszustand B2 gezeigt, wobei durch den größeren Normalabstand L2 zwischen den Lichtquellen 2a und der Optikvorrichtung 3 (bzw. dem optisch wirksamen Bereich 4) die Lichtquellen 2a unscharf dargestellt sind.

Die Lichtquellen 2a des Leuchtmittels 2 können aus zumindest zwei Lichtquellengruppen gebildet sein, wobei Lichtquellen einer ersten Lichtquellengruppe in der Lichtquellenfläche 2b an dem Lichtquellenträger 2c in einem ersten, vorzugsweise gleichmäßigen, Raster mit einem ersten Rasterabstand zueinander angeordnet sind, wobei Lichtquellen einer zweiten Lichtquellengruppe in der Lichtquellenfläche 2b an dem Lichtquellenträger 2c in einem zweiten, vorzugsweise gleichmäßigen, Raster mit einem zweiten Rasterabstand zueinander angeordnet sind, wobei der erste Rasterabstand größer als der zweite Rasterabstand ist.

Ebenso kann der optisch wirksame Bereich 4 der Optikvorrichtung 3 aus zumindest zwei optisch wirksamen Teilbereichen gebildet sein, wobei ein erster optisch wirksamer Teilbereich eine erste Anzahl an Streuelementen 7 und ein zweiter optisch wirksamer Teilbereich eine zweite Anzahl an Streuelementen 7 aufweist, wobei die erste und zweite Anzahl an Streuelementen 7 unterschiedlich sind.

Das Leuchtmittel 2 kann zu der Optikvorrichtung 3 derart angeordnet sein, dass Licht der ersten Lichtquellengruppe auf den ersten optisch wirksamen Teilbereich und Licht der zweiten Lichtquellengruppe auf den zweiten optisch wirksamen Teilbereich trifft.

Die erste Lichtfunktion kann eine Informationswiedergabe-Lichtfunktion sein, mittels derer ein definierbares, vorgebbares Symbol, welches aus einzelnen leuchtenden Lichtquellen zusammengesetzt ist, darstellbar ist, wobei vorzugsweise die zweite Lichtfunktion ein Bremslicht, eine Fahrtrichtungsanzeiger-Lichtfunktion, ein Tagfahrlicht, ein Positionslicht oder ein Stopplicht ist.

## Patentansprüche

1. Beleuchtungsvorrichtung (1) für einen Kraftfahrzeugscheinwerfer oder ein Kraftfahrzeug, wobei die Beleuchtungsvorrichtung ein Leuchtmittel (2) und eine dem Leuchtmittel (2) zugeordnete Optikvorrichtung (3) aufweist, wobei das Leuchtmittel (2) zur Erzeugung von Licht und zur Abstrahlung des erzeugten Lichts auf die Optikvorrichtung (3) eingerichtet ist, und die Optikvorrichtung (3) zur Realisierung von zumindest zwei unterschiedlichen Lichtfunktionen aus dem Licht des Leuchtmittels (2) eingerichtet ist,
wobei die Optikvorrichtung (3) einen optisch wirksamen Bereich (4) umfasst, welcher eine optische Achse (x) und eine Hauptebene (4c) aufweist, wobei der optisch wirksame Bereich (4) eine Lichteintrittsfläche (4a) und eine der Lichteintrittsfläche (4a) gegenüberliegende Lichtaustrittsfläche (4b) aufweist, wobei von dem Leuchtmittel (2) abgestrahltes Licht über die Lichteintrittsfläche (4a) in den optisch wirksamen Bereich (4) der Optikvorrichtung (3) eintritt, durch den optisch wirksamen Bereich (4) der Optikvorrichtung (3) durchtritt und über die Lichtaustrittsfläche (4b) aus dem optisch wirksamen Bereichs (4) der Optikvorrichtung (3) austritt, wobei die Optikvorrichtung (3) ein Einstellmittel (5) aufweist, welches dazu eingerichtet ist, Betriebszustände der Optikvorrichtung (3) einzustellen, wobei zumindest zwei unterschiedliche Betriebszustände der Optikvorrichtung (3) vorgesehen sind,
wobei in einem ersten Betriebszustand (B1) die Optikvorrichtung (3) mit dem Licht des Leuchtmittels (2) beim Durchtritt durch den optisch wirksamen Bereich (4a) eine erste Lichtfunktion ausbildet, und in einem zweiten Betriebszustand (B2) die Optikvorrichtung (3) mit dem Licht des Leuchtmittels (2) beim Durchtritt durch den optisch wirksamen Bereich (3) eine, von der ersten Lichtfunktion unterschiedliche, zweite Lichtfunktion ausbildet,
**dadurch gekennzeichnet, dass**
das Leuchtmittel (2) eine Vielzahl von in einem Mindestabstand zueinander beabstandeten Lichtquellen (2a) umfasst, welche in einer Lichtquellenfläche (2b), vorzugsweise gleichmäßig, verteilt an einem Lichtquellenträger (2c) des Leuchtmittels (2) angeordnet sind, wobei jede Lichtquelle (2a) ein divergentes Lichtbündel mit einem Öffnungswinkel (a) abstrahlt, welches sich entlang einer Hauptabstrahlrichtung (6) ausbreitet, wobei jedes Lichtbündel an dem optisch wirksamen Bereich (4) der Optikvorrichtung (3) einen Leuchtfleck ausbildet,
wobei der optisch wirksame Bereich (4) der Optikvorrichtung (3) Streuelemente (7) aufweist, welche dazu eingerichtet sind, das Licht der Lichtquellen (2a) beim Durchtritt durch den optisch wirksamen Bereich (4) um die Hauptabstrahlrichtung (6) zu streuen,
wobei das Einstellmittel (5) dazu eingerichtet ist, die Optikvorrichtung (3) derart einzustellen, dass im ersten Betriebszustand (B1) der optisch wirksame Bereich (4) der Optikvorrichtung (3) einen ersten Normalabstand (L1) zu der Lichtquellenfläche (2b) aufweist und im zweiten Betriebszustand (B2) der optisch wirksame Bereich (4) der Optikvorrichtung (3) einen zweiten Normalabstand (L2) zu der Lichtquellenfläche (2b) aufweist, wobei der erste Normalabstand (L1) derart ist, dass Leuchtflecken von Lichtbündeln von zwei benachbarten Lichtquellen (2a) an dem optisch wirksamen Bereich (4) überlappungsfrei sind, wobei der zweite Normalabstand (L2) größer als der erste Normalabstand (L1) ist, sodass Leuchtflecken von Lichtbündeln von zwei benachbarten Lichtquellen (2a) an dem optisch wirksamen Bereich (4) zumindest teilweise überlappen.

2. Beleuchtungsvorrichtung (1) nach Anspruch 1, wobei die Überlappung der Leuchtflecken von benachbarten Lichtbündeln im zweiten Betriebszustand (B2) zumindest 25 %, vorzugsweise mehr als 50%, insbesondere mehr als 75%, beträgt.

3. Beleuchtungsvorrichtung (1) nach einem der vorhergehenden Ansprüche, wobei die Hauptabstrahlrichtung (6) im Wesentlichen parallel zur optischen Achse (x) des optisch wirksamen Bereichs (4) orientiert ist.

4. Beleuchtungsvorrichtung (1) nach einem der vorhergehenden Ansprüche, wobei der optisch wirksame Bereich (4) der Optikvorrichtung (3) eben ausgestaltet ist, wobei die optische Achse (x) des optisch wirksamen Bereichs (4) orthogonal zur Hauptebene (4c) des optisch wirksamen Bereichs (4) orientiert ist.

5. Beleuchtungsvorrichtung (1) nach einem der vorhergehenden Ansprüche, wobei die Streuelemente (7) eine Vielzahl von in einem, vorzugsweise gleichmäßigen, Raster nebeneinander angeordneten Streulinsen, eine Vielzahl von streuend ausgebildeten Oberflächenstrukturen, oder eine Vielzahl von innerhalb des optisch wirksamen Bereichs (4) angeordneten Streupartikel umfassen.

6. Beleuchtungsvorrichtung (1) nach einem der vorhergehenden Ansprüche, wobei der Übergang vom ersten Normalabstand (L1) zum zweiten Normalabstand (L2) zwischen der Hauptebene (4c) des optisch wirksamen Bereichs (4) der Optikvorrichtung (3) und der Lichtquellenfläche (2b) des Leuchtmittels (2) mit dem Einstellmittel (5) im Wesentlichen stufenlos einstellbar ist.

7. Beleuchtungsvorrichtung (1) nach einem der vorhergehenden Ansprüche, wobei das Einstellmittel (5) dazu eingerichtet ist, einen von dem ersten (B1) und zweiten Betriebszustand (B2) unterschiedlichen dritten Betriebszustand der Optikvorrichtung (3) einzustellen, wobei das Einstellmittel (5) beim Übergang in den dritten Betriebszustand eine Verschiebung und/oder Verschwenkung der Optikvorrichtung (3) relativ zu den Lichtquellen (2a) des Leuchtmittels (2) durchführt, wobei bei der Verschiebung und/oder Verschwenkung die Optikvorrichtung (3) derart verschoben und/oder verschwenkt wird, dass im dritten Betriebszustand der optisch wirksame Bereich (4) der Optikvorrichtung (3) außerhalb eines Strahlengangs des Lichts des Leuchtmittels (2) liegt, sodass im dritten Betriebszustand der optisch wirksame Bereich (4) im Wesentlichen unbeleuchtet ist.

8. Beleuchtungsvorrichtung (1) nach einem der vorhergehenden Ansprüche, umfassend eine Lichtquellen-Steuervorrichtung, welche dazu eingerichtet ist, die Lichtquellen (2a) des Leuchtmittels (2) einzeln anzusteuern, wobei vorzugsweise die Lichtquellen (2a) als LEDs ausgebildet sind.

9. Beleuchtungsvorrichtung (1) nach einem der vorhergehenden Ansprüche, wobei die Lichtquellen (2a) in der Lichtquellenfläche (2b) an dem Lichtquellenträger (2c) in einem Raster verteilt angeordnet sind, wobei die Lichtquellen (2a) insbesondere entlang von Zeilen und Spalten eines zweidimensionalen, vorzugsweise gleichmäßigen, Rasters angeordnet sind.

10. Beleuchtungsvorrichtung (1) nach einem der vorhergehenden Ansprüche, wobei der Lichtquellenträger (2c) eben ausgestaltet ist, wobei vorzugsweise die Lichtquellenfläche (2b), welche insbesondere eben ausgestaltet ist, im Wesentlichen parallel zu dem Lichtquellenträger (2c) orientiert ist.

11. Beleuchtungsvorrichtung (1) nach einem der vorhergehenden Ansprüche, wobei die Lichtquellen (2a) des Leuchtmittels (2) aus zumindest zwei Lichtquellengruppen gebildet sind, wobei Lichtquellen einer ersten Lichtquellengruppe in der Lichtquellenfläche (2b) an dem Lichtquellenträger (2c) in einem ersten, vorzugsweise gleichmäßigen, Raster mit einem ersten Rasterabstand zueinander angeordnet sind, wobei Lichtquellen einer zweiten Lichtquellengruppe in der Lichtquellenfläche (2b) an dem Lichtquellenträger (2c) in einem zweiten, vorzugsweise gleichmäßigen, Raster mit einem zweiten Rasterabstand zueinander angeordnet sind, wobei der erste Rasterabstand größer als der zweite Rasterabstand ist.

12. Beleuchtungsvorrichtung (1) nach einem der vorhergehenden Ansprüche, wobei der optisch wirksame Bereich (4) der Optikvorrichtung (3) aus zumindest zwei optisch wirksamen Teilbereichen gebildet ist, wobei ein erster optisch wirksamer Teilbereich eine erste Anzahl an Streuelementen und ein zweiter optisch wirksamer Teilbereich eine zweite Anzahl an Streuelementen aufweist, wobei die erste und zweite Anzahl an Streuelementen unterschiedlich sind.

13. Beleuchtungsvorrichtung (1) nach Anspruch 11 und 12, wobei das Leuchtmittel (2) zu der Optikvorrichtung (3) derart angeordnet ist, dass Licht der ersten Lichtquellengruppe auf den ersten optisch wirksamen Teilbereich und Licht der zweiten Lichtquellengruppe auf den zweiten optisch wirksamen Teilbereich trifft.

14. Beleuchtungsvorrichtung (1) nach einem der vorhergehenden Ansprüche, wobei die erste Lichtfunktion eine Informationswiedergabe-Lichtfunktion ist, mittels derer ein definierbares, vorgebbares Symbol, welches aus einzelnen leuchtenden Lichtquellen zusammengesetzt ist, darstellbar ist, wobei vorzugsweise die zweite Lichtfunktion ein Bremslicht, eine Fahrtrichtungsanzeiger-Lichtfunktion, ein Tagfahrlicht, ein Positionslicht oder ein Stopplicht ist.

15. Kraftfahrzeugscheinwerfer, umfassend eine Beleuchtungsvorrichtung (1) nach einem der vorhergehenden Ansprüche.

## Claims

1. Lighting device (1) for a motor vehicle headlight or a motor vehicle, the lighting device having a illuminant (2) and an optical device (3) assigned to the illuminant (2), the illuminant (2) being set up to generate light and to radiate the generated light onto the optical device (3), and the optical device (3) being set up to realize at least two different light functions from the light of the illuminant (2),
wherein the optical device (3) comprises an optically effective area (4) which has an optical axis (x) and a main plane (4c), wherein the optically effective area (4) has a light entry surface (4a) and a light exit surface (4b) opposite the light entry surface (4a), wherein light emitted by the illuminant (2) enters the optically effective area (4) of the optical device (3) via the light entry surface (4a), passes through the optically effective region (4) of the optical device (3) and emerges from the optically effective region (4) of the optical device (3) via the light exit surface (4b), the optical device (3) having an adjustment means (5) which is set up to adjust operating states of the optical device (3), at least two different operating states of the optical device (3) being provided,
wherein in a first operating state (B1) the optical device (3) forms a first light function with the light of the illuminant (2) as it passes through the optically effective region (4a), and in a second operating state (B2) the optical device (3) forms a second light function, different from the first light function, with the light of the illuminant (2) as it passes through the optically effective region (3),
**characterized in that**
the illuminant (2) comprises a plurality of light sources (2a) which are spaced at a minimum distance from one another and are arranged in a light source surface (2b), preferably uniformly distributed, on a light source carrier (2c) of the illuminant (2), wherein each light source (2a) emits a divergent light beam with an opening angle (a) which propagates along a main emission direction (6), wherein each light beam forms a light spot at the optically effective area (4) of the optical device (3),
wherein the optically effective region (4) of the optical device (3) has scattering elements (7) which are arranged to scatter the light of the light sources (2a) about the main radiation direction (6) as it passes through the optically effective region (4),
wherein the adjusting means (5) is arranged to adjust the optical device (3) in such a way that in the first operating state (B1) the optically effective region (4) of the optical device (3) is at a first normal distance (L1) from the light source surface (2b) and in the second operating state (B2) the optically effective region (4) of the optical device (3) is at a second normal distance (L2) from the light source surface (2b), wherein the first normal distance (L1) is such that light spots of light beams from two adjacent light sources (2a) at the optically effective area (4) are non-overlapping, wherein the second normal distance (L2) is greater than the first normal distance (L1) so that light spots of light beams from two adjacent light sources (2a) at least partially overlap at the optically effective area (4).

2. Lighting device (1) according to claim 1, wherein the overlap of the light spots of neighboring light beams in the second operating state (B2) is at least 25%, preferably more than 50%, in particular more than 75%.

3. Lighting device (1) according to one of the preceding claims, wherein the main radiation direction (6) is oriented substantially parallel to the optical axis (x) of the optically effective area (4).

4. Lighting device (1) according to one of the preceding claims, wherein the optically effective region (4) of the optical device (3) is designed to be planar, wherein the optical axis (x) of the optically effective region (4) is oriented orthogonally to the main plane (4c) of the optically effective region (4).

5. Lighting device (1) according to one of the preceding claims, wherein the scattering elements (7) comprise a plurality of scattering lenses arranged next to one another in a, preferably uniform, grid, a plurality of surface structures formed in a scattering manner, or a plurality of scattering particles arranged within the optically effective region (4).

6. Lighting device (1) according to one of the preceding claims, wherein the transition from the first normal distance (L1) to the second normal distance (L2) between the main plane (4c) of the optically effective region (4) of the optical device (3) and the light source surface (2b) of the illuminant (2) is substantially steplessly adjustable by means of the adjusting means (5).

7. Lighting device (1) according to one of the preceding claims, wherein the setting means (5) is set up to set a third operating state of the optical device (3) which differs from the first (B1) and second operating state (B2), wherein the setting means (5) performs a displacement and/or pivoting of the optical device (3) relative to the light sources (2a) of the illuminant (2) during the transition to the third operating state, the optical device (3) being displaced and/or pivoted during the displacement and/or pivoting in such a way that in the third operating state the optically effective region (4) of the optical device (3) lies outside a beam path of the light of the illuminant (2), so that in the third operating state the optically effective region (4) is essentially unlit.

8. Lighting device (1) according to one of the preceding claims, comprising a light source control device which is set up to control the light sources (2a) of the illuminant (2) individually, the light sources (2a) preferably being designed as LEDs.

9. Lighting device (1) according to one of the preceding claims, wherein the light sources (2a) are arranged distributed in the light source surface (2b) on the light source carrier (2c) in a grid, wherein the light sources (2a) are arranged in particular along rows and columns of a two-dimensional, preferably uniform, grid.

10. Lighting device (1) according to one of the preceding claims, wherein the light source carrier (2c) is designed to be flat, wherein preferably the light source surface (2b), which in particular is designed to be flat, is oriented substantially parallel to the light source carrier (2c).

11. Lighting device (1) according to one of the preceding claims, wherein the light sources (2a) of the illuminant (2) are formed from at least two light source groups, wherein light sources of a first light source group are arranged in the light source surface (2b) on the light source carrier (2c) in a first, preferably uniform, grid with a first grid spacing, light sources of a second light source group are arranged in the light source surface (2b) on the light source carrier (2c) in a second, preferably uniform, grid with a second grid spacing from one another, the first grid spacing being greater than the second grid spacing.

12. Lighting device (1) according to one of the preceding claims, wherein the optically effective area (4) of the optics device (3) is formed from at least two optically effective partial areas, wherein a first optically effective partial area has a first number of scattering elements and a second optically effective partial area has a second number of scattering elements, wherein the first and second number of scattering elements are different.

13. Lighting device (1) according to claims 11 and 12, wherein the illuminant (2) is arranged relative to the optical device (3) in such a way that light from the first light source group impinges on the first optically effective partial area and light from the second light source group impinges on the second optically effective partial area.

14. Lighting device (1) according to one of the preceding claims, wherein the first light function is an information-rendering light function, by means of which a definable, predeterminable symbol, which is composed of individual illuminating light sources, can be displayed, wherein preferably the second light function is a brake light, a direction indicator light function, a daytime running light, a position light or a stop light.

15. Motor vehicle headlamp, comprising a lighting device (1) according to one of the preceding claims.

## Revendications

1. Dispositif d'éclairage (1) pour un projecteur de véhicule automobile ou un véhicule automobile, le dispositif d'éclairage présentant un moyen d'éclairage (2) et un dispositif optique (3) associé au moyen d'éclairage (2), le moyen d'éclairage (2) étant conçu pour produire de la lumière et pour rayonner la lumière produite sur le dispositif optique (3), et le dispositif optique (3) étant conçu pour réaliser au moins deux fonctions lumineuses différentes à partir de la lumière du moyen d'éclairage (2),
le dispositif optique (3) comprenant une zone optiquement efficace (4) qui présente un axe optique (x) et un plan principal (4c), la zone optiquement efficace (4) présentant une surface d'entrée de lumière (4a) et une surface de sortie de lumière (4b) opposée à la surface d'entrée de lumière (4a), la lumière émise par le moyen d'éclairage (2) entrant dans la zone optiquement efficace (4) du dispositif optique (3) par l'intermédiaire de la surface d'entrée de lumière (4a), traverse la zone optiquement active (4) du dispositif optique (3) et sort de la zone optiquement active (4) du dispositif optique (3) par la surface de sortie de lumière (4b), le dispositif optique (3) présentant un moyen de réglage (5) qui est conçu pour régler les états de fonctionnement du dispositif optique (3), au moins deux états de fonctionnement différents du dispositif optique (3) étant prévus,
dans un premier état de fonctionnement (B1), le dispositif optique (3) forme une première fonction lumineuse avec la lumière du moyen d'éclairage (2) lors du passage à travers la zone optiquement active (4a), et dans un deuxième état de fonctionnement (B2), le dispositif optique (3) forme une deuxième fonction lumineuse, différente de la première fonction lumineuse, avec la lumière du moyen d'éclairage (2) lors du passage à travers la zone optiquement active (3),
**caractérisé en ce que**
le moyen d'éclairage (2) comprend une pluralité de sources lumineuses (2a) espacées les unes des autres d'une distance minimale, qui sont disposées dans une surface de source lumineuse (2b), de préférence réparties uniformément, sur un support de source lumineuse (2c) du moyen d'éclairage (2), chaque source lumineuse (2a) émettant un faisceau lumineux divergent avec un angle d'ouverture (a), qui se propage le long d'une direction d'émission principale (6), chaque faisceau lumineux formant une tache lumineuse sur la zone optiquement active (4) du dispositif optique (3),
la zone optiquement active (4) du dispositif optique (3) présentant des éléments de diffusion (7) qui sont adaptés pour diffuser la lumière des sources lumineuses (2a) autour de la direction de rayonnement principale (6) lors du passage à travers la zone optiquement active (4),
le moyen de réglage (5) étant conçu pour régler le dispositif optique (3) de telle sorte que, dans le premier état de fonctionnement (B1), la zone optiquement active (4) du dispositif optique (3) présente une première distance normale (L1) par rapport à la surface de source lumineuse (2b) et, dans le deuxième état de fonctionnement (B2), la zone optiquement active (4) du dispositif optique (3) présente une deuxième distance normale (L2) par rapport à la surface de source lumineuse (2b), la première distance normale (L1) étant telle que les taches lumineuses de faisceaux lumineux de deux sources lumineuses (2a) voisines ne se chevauchent pas au niveau de la zone optiquement active (4), la deuxième distance normale (L2) étant supérieure à la première distance normale (L1), de sorte que les taches lumineuses de faisceaux lumineux de deux sources lumineuses (2a) voisines se chevauchent au moins partiellement au niveau de la zone optiquement active (4).

2. Dispositif d'éclairage (1) selon la revendication 1, dans lequel le chevauchement des taches lumineuses de faisceaux lumineux voisins dans le deuxième état de fonctionnement (B2) est d'au moins 25 %, de préférence de plus de 50 %, en particulier de plus de 75 %.

3. Dispositif d'éclairage (1) selon l'une des revendications précédentes, dans lequel la direction principale d'émission (6) est orientée sensiblement parallèlement à l'axe optique (x) de la zone optiquement active (4).

4. Dispositif d'éclairage (1) selon l'une des revendications précédentes, dans lequel la zone optiquement active (4) du dispositif optique (3) est plane, l'axe optique (x) de la zone optiquement active (4) étant orienté orthogonalement au plan principal (4c) de la zone optiquement active (4).

5. Dispositif d'éclairage (1) selon l'une des revendications précédentes, dans lequel les éléments de diffusion (7) comprennent une pluralité de lentilles de diffusion disposées les unes à côté des autres selon une trame, de préférence régulière, une pluralité de structures de surface conçues pour diffuser, ou une pluralité de particules de diffusion disposées à l'intérieur de la zone optiquement active (4).

6. Dispositif d'éclairage (1) selon l'une des revendications précédentes, dans lequel le passage de la première distance normale (L1) à la deuxième distance normale (L2) entre le plan principal (4c) de la zone optiquement active (4) du dispositif optique (3) et la surface de source lumineuse (2b) du moyen d'éclairage (2) est réglable sensiblement en continu à l'aide du moyen de réglage (5).

7. Dispositif d'éclairage (1) selon l'une des revendications précédentes, dans lequel le moyen de réglage (5) est agencé pour régler un troisième état de fonctionnement du dispositif optique (3) différent du premier (B1) et du deuxième (B2) état de fonctionnement, le moyen de réglage (5) effectuant un déplacement et/ou un pivotement du dispositif optique (3) par rapport aux sources lumineuses (2a) du moyen d'éclairage (2) lors du passage au troisième état de fonctionnement, le dispositif optique (3) étant déplacé et/ou pivoté lors du déplacement et/ou du pivotement de telle sorte que, dans le troisième état de fonctionnement, la zone optiquement active (4) du dispositif optique (3) se trouve à l'extérieur d'un trajet de rayons de la lumière du moyen d'éclairage (2), de sorte que, dans le troisième état de fonctionnement, la zone optiquement active (4) est essentiellement non éclairée.

8. Dispositif d'éclairage (1) selon l'une des revendications précédentes, comprenant un dispositif de commande de sources lumineuses qui est conçu pour commander individuellement les sources lumineuses (2a) du moyen d'éclairage (2), les sources lumineuses (2a) étant de préférence conçues comme des LED.

9. Dispositif d'éclairage (1) selon l'une des revendications précédentes, dans lequel les sources lumineuses (2a) sont réparties dans la surface de source lumineuse (2b) sur le support de source lumineuse (2c) selon une trame, les sources lumineuses (2a) étant notamment disposées le long de lignes et de colonnes d'une trame bidimensionnelle, de préférence régulière.

10. Dispositif d'éclairage (1) selon l'une des revendications précédentes, dans lequel le support de source lumineuse (2c) est plan, de préférence la surface de source lumineuse (2b), qui est notamment plane, est orientée sensiblement parallèlement au support de source lumineuse (2c).

11. Dispositif d'éclairage (1) selon l'une des revendications précédentes, dans lequel les sources lumineuses (2a) du moyen d'éclairage (2) sont formées d'au moins deux groupes de sources lumineuses, les sources lumineuses d'un premier groupe de sources lumineuses étant disposées dans la surface (2b) de la source lumineuse sur le support (2c) de la source lumineuse selon un premier ordre, de préférence uniforme, des sources lumineuses d'un deuxième groupe de sources lumineuses sont disposées dans la surface de source lumineuse (2b) sur le support de source lumineuse (2c) dans une deuxième trame, de préférence uniforme, avec une deuxième distance de trame l'une par rapport à l'autre, la première distance de trame étant supérieure à la deuxième distance de trame.

12. Dispositif d'éclairage (1) selon l'une des revendications précédentes, dans lequel la zone optiquement active (4) du dispositif optique (3) est formée d'au moins deux zones partielles optiquement actives, une première zone partielle optiquement active présentant un premier nombre d'éléments de diffusion et une deuxième zone partielle optiquement active présentant un deuxième nombre d'éléments de diffusion, le premier et le deuxième nombre d'éléments de diffusion étant différents.

13. Dispositif d'éclairage (1) selon les revendications 11 et 12, dans lequel le moyen d'éclairage (2) est disposé par rapport au dispositif optique (3) de telle sorte que la lumière du premier groupe de sources lumineuses frappe la première zone partielle optiquement active et que la lumière du deuxième groupe de sources lumineuses frappe la deuxième zone partielle optiquement active.

14. Dispositif d'éclairage (1) selon l'une des revendications précédentes, dans lequel la première fonction d'éclairage est une fonction d'éclairage de reproduction d'informations, au moyen de laquelle un symbole définissable et prédéfinissable, qui est composé de différentes sources lumineuses, peut être représenté, la deuxième fonction d'éclairage étant de préférence un feu de stop, une fonction d'éclairage d'indicateur de direction, un feu de jour, un feu de position ou un feu d'arrêt.

15. Projecteur de véhicule automobile comprenant un dispositif d'éclairage (1) selon l'une quelconque des revendications précédentes.
